(19) Europäisches Patentamt

European Patent Office

Office européen des brevets

(11) Veröffentlichungsnummer: **0 581 214 A1**

## (12) EUROPÄISCHE PATENTANMELDUNG

(21) Anmeldenummer: **93111830.1**

(22) Anmeldetag: **24.07.93**

(51) Int. Cl.⁵: **A01M 29/02**, G10K 5/02, G10K 9/13

(30) Priorität: **27.07.92 US 919248**

(43) Veröffentlichungstag der Anmeldung:
**02.02.94 Patentblatt 94/05**

(84) Benannte Vertragsstaaten:
**AT BE CH DE DK ES FR GB GR IE IT LI LU MC NL PT SE**

(71) Anmelder: **WINNER INTERNATIONAL**
**32 West State Street**
**Sharon Pennsylvania 16146(US)**

(72) Erfinder: **Carlo, Louis D.**
**35668 Dunham Road**
**Litchfield, Ohio 44253(US)**
Erfinder: **Shives, Michael J.**
**732 Jefferson Blvd.**
**Hagerstown, Maryland 21740(US)**
Erfinder: **Garner, Jon E.**
**Route 1, Box 435**
**Purcellville, Virginia 22132(US)**

(74) Vertreter: **Hennicke, Albrecht, Dipl.-Ing.**
**Patentanwälte Dipl.-Ing. Buschhoff**
**Dipl.-Ing. Hennicke**
**Dipl.-Ing. Vollbach,**
**Kaiser-Wilhelm-Ring 24**
**D-50672 Köln (DE)**

(54) **Elektronische Warneinrichtung zum Verscheuchen von Tieren.**

㉗ Die Erfindung betrifft eine elektronische Alarmvorrichtung (10), insbesondere für Fahrzeuge (12), die Ultraschallgeräusche (14) erzeugt, um Tiere (3) davon abzuhalten, in die Fahrbahn des Fahrzeugs zu laufen. Die Vorrichtung besteht im wesentlichen aus einem einfachen Treiber- oder Ansteuerungsmechanismus (20) zum Erzeugen von elektrischen Impulsen (83) mit Rechteckwellenform und konstanter Amplitude. Der Treiber (20) erzeugt die Rechteckwellen mit periodisch ansteigenden und abfallenden Frequenzen. Die Rechteckwellen werden von einem Koppeltransformator (31) in elektrische Sinuswellen (100) mit großen Spitze-Spitze-Spannungen umgesetzt und einem piezo-elektrischen Wandler (36) zugeleitet, der diese in Ultraschallgeräusche umsetzt, die abwechselnd ansteigende und abfallende Frequenzen haben, wodurch ein Heulton ähnlich einer Sirene erzeugt wird. Dabei besteht für den Wandler (36) keine Überhitzungsgefahr oder Gefahr vorzeitigen Ausfalls. Der Ultraschallheulton verwirrt das Tier und verhindert, daß es in die Fahrbahn des Fahrzeugs läuft. Dabei wird das Tier weder verletzt noch sein Gehör beeinträchtigt.

FIG. 4

EP 0 581 214 A1

Die Erfindung betrifft eine Vorrichtung zum Verscheuchen von Tieren, die Ultraschallgeräusche wahrnehmen können.

Die Erfindung ist weiter auf eine elektronische Vorrichtung insbesondere zum Einbau in Fahrzeuge gerichtet, bei deren Betätigung Tiere aufgeschreckt und verscheucht werden und sie wird anhand dieser speziellen Anwendung beschrieben werden. Die Erfindung schadet den Tieren nicht und dient bevorzugt dazu, die Tiere davon abzuhalten, in die Fahrbahn eines fahrenden Wagens zu laufen und dadurch einen Unfall zu verursachen.

Die Erfindung ist jedoch nicht auf ihre Anwendung in Fahrzeugen beschränkt, sondern kann auch bei feststehenden Gegenständen wie z.B. einem Zelt verwendet werden oder als unsichtbarer Begrenzungszaun dienen, um Tiere davon abzuhalten, in einen bestimmten Bereich einzudringen.

Es gibt Situationen, in denen das Zusammentreffen zwischen Mensch und Tier gefährliche Folgen für Mensch oder Tier haben kann. Als Beispiel seien die zahllosen Unfälle zwischen Tieren und fahrenden Wagen auf Landstraßen genannt. Die Erfindung dient bevorzugt zur Vermeidung solcher Unfälle; sie kann aber auch in anderen Bereichen verwendet werden. Jäger und Camper können von Tieren belästigt werden, die in ihre Zelte oder Zeltplätze eindringen. In Städten und Gemeinden treffen Postboten häufig auf bissige Hunde. Landwirte und Tierzüchter müssen oft bestimmte Landstücke abgrenzen, in die Tiere nicht eindringen sollen.

Es ist bekannt, daß viele Tiere Ultraschallwellen wahrnehmen und deren Schallquelle orten können. Es wird angenommen, daß das Tier eine Zeitverzögerung wahrnimmt, die sich aus der größeren Laufdauer von an feststehenden Objekten reflektierten Ultraschallwellen gegenüber den Wellen ergibt, die direkt von der Geräuschquelle zum Tier gelangen. Durch diese Zeitverzögerung kann das Tier die Lage der Geräuschquelle bestimmen.

Hiervon machen mechanische Vorrichtungen Gebrauch, die Ultraschallgeräusche mit veränderlicher Frequenz erzeugen. Da die Ultraschallgeräusche eine sich verändernde Frequenz haben, kann ein Tier die Geräuschquelle nicht lokalisieren, da es mit Zeitverzögerung ankommende Reflexionswellen nicht mit den auf direktem Wege eintreffenden Schallwellen vergleichen kann. Die reflektierten Wellen haben eine größere Laufzeit, bevor sie das Tier erreichen. Ihre Frequenz ist dann eine andere als die Frequenz der Welle, die das Tier auf direktem Weg erreicht. Hierdurch wird das Tier verwirrt und verläßt die Umgebung der Geräuschquelle, wobei es sich auch nicht versehentlich in Richtung auf die Geräuschquelle zubewegt. Durch das Ultraschallgeräusch wird das Tier weder verletzt noch wird sein Gehör beeinträchtigt.

Eine mechanische Vorrichtung, die auf diesem Prinzip beruht, ist derzeit unter dem Warenzeichen "DAZZLER" erhältlich. Diese mechanische Vorrichtung kann in der Hand gehalten werden, so daß sie z.B. von einem Postboten benutzt werden kann, um den Angriff eines Hundes abzuwehren. Mit dieser bekannten Vorrichtung können jedoch keine ausreichend starken Ultraschallgeräusche erzeugt werden. Außerdem haben derartige mechanische Vorrichtungen nur eine begrenzte Lebensdauer und sind umständlich zu handhaben.

Aufgabe der Erfindung ist es, eine Alarmvorrichtung zu schaffen, mit der ausreichend laute und wiederholbare Ultraschallgeräusche mit sich verändernder Frequenz auf elektronischem Wege erzeugt werden können, um Tiere zu verwirren, zu desorientieren und zu verscheuchen, ohne sie jedoch zu verletzen.

Diese Aufgabe wird mit der Erfindung durch eine Vorrichtung gelöst, die einen Schallwandler (sound transducer) zum Erzeugen von Geräuschen mit Ultraschallfrequenzen aufweist und die einen elektrischen Mechanismus oder Schaltkreis hat, der von einer elektrischen Stromquelle gespeist wird und den Wandler dazu bringt, periodisch wiederkehrende, erste und zweite, aufeinander folgende Schallwellengruppen mit sich verändernden Ultraschallfrequenzen zu erzeugen, wodurch von dem Wandler ein sirenenartiger Triller- oder Heulton im Ultraschallbereich erzeugt wird, der das Tier verwirrt und verscheucht.

In weiterer Ausgestaltung der Erfindung kann ein Fahrzeug mit einer Alarmvorrichtung ausgerüstet werden, die mit Ultraschall arbeitet und Tiere, die Ultraschallgeräusche wahrnehmen können, davon abhält, mit dem Fahrzeug zusammenzustoßen. Die Alarmvorrichtung wird zweckmäßig von der Batterie des Motorfahrzeugs mit Strom versorgt und hat einen elektrischen Ansteuerungsmechanismus oder -schaltkreis, der den elektrischen Strom in mehrere elektrische Pulse umformt, die aus Spannungswellen mit wechselnden Frequenzen bestehen. Die elektrischen Impulse werden von einem piezo-elektrischen Wandler in geordneter Reihenfolge empfangen und in Ultraschallwellen mit den gleichen sich ändernden Frequenzen der aufeinander folgenden elektrischen Wellen umgewandelt. Hierdurch wird ein Heuleffekt wie von einer Sirene erzielt, wodurch ein Tier verwirrt und desorientiert wird, das dieses eine Sirene nachahmende Ultraschallgeräusch wahrnimmt.

In vorteilhafter Ausgestaltung der Erfindung weist die Vorrichtung einen Treiberschaltkreis auf, um abwechselnd erste und zweite Pulse mit mehreren elektrischen Spannungswellen zu erzeugen, die bestimmte Spannungswellenformen mit wechselnder Frequenz haben. Die Vorrichtung hat ferner einen Koppeltransformator, der an seiner Primärseite die aufeinanderfolgenden Pulse von elektrischen Wellen empfängt, einen Kondensator in Parallelschaltung zur Sekundärseite des Koppeltransformators und einen piezoelektrischen Wandler, der mit dem Transformator und dem Kondensator parallelgeschaltet ist und der abwechselnd erste und zweite Gruppen von sich verändernden Ultraschallgeräuschen erzeugt, deren Wellenlängen denen der elektrischen Wellen entsprechen. Der Wandler erzeugt so die sich periodisch wiederholenden, unterschiedlichen Ultraschallgeräusche mit dem an- und abschwellenden Effekt einer Sirene, der die Tiere verwirrt und desorientiert, wodurch ein Unfall zwischen Fahrzeug und Tier vermieden wird.

Besonders vorteilhaft ist es, wenn der Transformator eine gleichbleibende Spitze-Spitze-Spannung (peak-to-peak voltage) oder Doppelamplitudenspannung in Form einer kontinuierlichen Sinusschwingung abgibt, die an dem piezoelektrischen Wandler anliegt. Der Wandler kann dann Geräusche mit einer Intensität oder Lautstärke aussenden, die größer ist als bei anderen Wellenformen, ohne daß er überhitzt wird und vorzeitig ausfällt. Als Spitze-Spitze-Spannung soll hier die Amplitude zwischen den oberen und unteren Wellenscheiteln der Spannungswellen verstanden werden.

Der Treiber verwendet bevorzugt mindestens einen Operationsverstärker oder -transistor der Klasse "C", der im Niederleistungszyklus arbeitet und der weniger Wärme erzeugt als Verstärker, die in Klasse "A" oder "B" arbeiten. Ein solcher Klasse "C" Verstärker benötigt nur einen kleinen Kühlkörper; darüber hinaus ist es damit möglich, die Anzahl der Bauteile im Schaltkreis gering zu halten. Ein solcher Klasse "C"-Verstärker benötigt keinen Sinuswellenentzerrkreis, um den piezoelektrischen Wandler zu betreiben.

In bevorzugter Ausgestaltung der Erfindung weist der Treiber einen Mikroprozessor auf, um eine Vielzahl von elektrischen Wellen mit fortlaufend wechselnden Frequenzen zu erzeugen und hat einen Zeitgebermechanismus oder -schaltkreis, der mit dem Mikroprozessor zusammenwirkt, um die Reihenfolge der sich verändernden Frequenzen periodisch derart zu verändern, daß die Frequenzen während eines diskreten Zeitintervalls, d.h. einer Pulsdauer, zuerst ansteigen und dann während eines weiteren diskreten Zeitintervalls absinken. Der Zeitgebermechanismus bewirkt bevorzugt, daß der Mikroprozessor einen Puls oder eine Reihe von elektrischen Wellen erzeugt, deren Frequenz zunächst von etwa 19 kHz auf etwa 24 kHz ansteigt und dann wieder von etwa 24 auf etwa 19 kHz abfällt, wobei der Zeitgeber den Mikroprozessor etwa alle 200 ms von Erhöhen auf Verringern der Frequenz umschaltet. Durch diese Anordnung ergibt sich ein preiswerter, robuster Schaltkreis zum elektrischen Ansteuern oder Treiben des Wandlers, der genau arbeitet.

Besonders vorteilhaft ist es, wenn der Treiberschaltkreis Spannungswellen mit Rechteckform mit sich verändernden Frequenzen erzeugt, die von einen im Klasse "C"-Zyklus arbeitenden Transistor verstärkt werden. Durch diese preisgünstige Schaltung wird die dem Wandler zugeführte Leistung erheblich verstärkt. Die Rechteckspannung wird von dem Koppeltransformator in eine kontinuierliche Sinuswellenspannung mit sich verändernden Frequenzen und konstantem Spitzen-Spitzen-Wert umgeformt. Dadurch erübrigt es sich, einen zusätzlichen, wellenbildenden Schaltkreis vorzusehen.

Die Erfindung kann bei einem Verfahren verwendet werden, mit dem Tiere davon abgehalten werden, in den Fahrweg eines sich bewegenden Fahrzeugs zu laufen. Nach der Erfindung wird ein elektrischer Treiber vorgesehen, der von der Fahrzeugbatterie gespeist wird, um einen ersten Puls mit Spannungswellen ansteigender Frequenz und einen darauffolgenden, zweiten Puls mit Spannungswellen abnehmender Frequenz zu erzeugen. Weiterhin wird das Fahrzeug mit einem piezoelektrischen Wandler versehen, der Ultraschallgeräusche erzeugen kann. Die Spannungswellen werden dem Wandler zugeleitet und bewirken, daß dieser abwechselnd eine erste Klangsequenz von Ultraschallwellen mit wachsenden Frequenzen und eine darauffolgende, zweite Klangsequenz von Ultraschallwellen mit sich verringernder Frequenz ausstrahlt, wodurch ein an- und abschwellendes Ultraschallgeräusch entsteht, das verhindert, daß sich ein Tier in den Fahrweg des Fahrzeugs bewegt.

Der Treiberschaltkreis oder Ansteuerungsmechanismus hat zweckmäßig einen Niederspannungs-Detektor-Schaltkreis, der die Vorrichtung abschaltet, wenn die Fahrzeugbatterie ungenügend geladen ist. Der Treiberschaltkreis kann auch eine Bewegungsaufnahmeeinrichtung aufweisen, die auf Vibrationen des Fahrzeugs reagiert, wenn dessen Motor läuft. Die Warneinrichtung wird dadurch nur dann betätigt, wenn das Fahrzeug fährt oder sein Motor läuft. Es ist auch möglich, eine preiswerte Leuchtdiode vorzusehen, an der der Fahrer erkennen kann, daß der piezoelektrische Wandler in Betrieb ist.

Mit der erfindungsgemäßen Vorrichtung ist es möglich, Ultraschallgeräusche exakt und mit genau gesteuerten Lautstärken und Frequenzen zu erzeugen. Die Vorrichtung ist preiswert, da sie nur sehr wenige Schaltkreise verwendet, wobei jeder Schaltkreis nur eine geringe Anzahl elektrischer Bauteile aufweist. Die Vorrichtung verstärkt die elektrische Spannung erheblich, so daß ihr piezoelektrischer Wandler mit höchster Intensität betrieben wird. Mit Hilfe des bevorzugt verwendeten Sinuswellengenerators ist es möglich, den piezoelektrischen Ultraschallwellenwandler mit großer Intensität zu betreiben, ohne daß dieser sich überhitzt und vorzeitig ausfällt.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert ist. Es zeigt:

Fig.1     eine schematische Darstellung von Schallwellenübertragung in einem Anwendungsfall der Erfindung;

Fig.2     eine schematische, graphische Darstellung der Frequenz in Abhängigkeit von der Zeit, mit Sinuswellenspannungen, die im Betrieb der Erfindung erzeugt werden;

Fig.3     eine schematische, graphische Darstellung von Spannung in Abhängigkeit von der Zeit, die die Sinuswellenspannungen veranschaulicht, die im Betrieb der Erfindung erzeugt werden;

Fig.4     einen elektischen Schaltplan, der einen Teil des Schaltkreises darstellt, wie er in der Vorrichtung nach der Erfindung verwendet wird; und

Fig.5     einen elektrischen Schaltplan eines anderen Teils des Schaltkreises der Erfindung mit dem piezoelektrischen Wandlerschaltkreis.

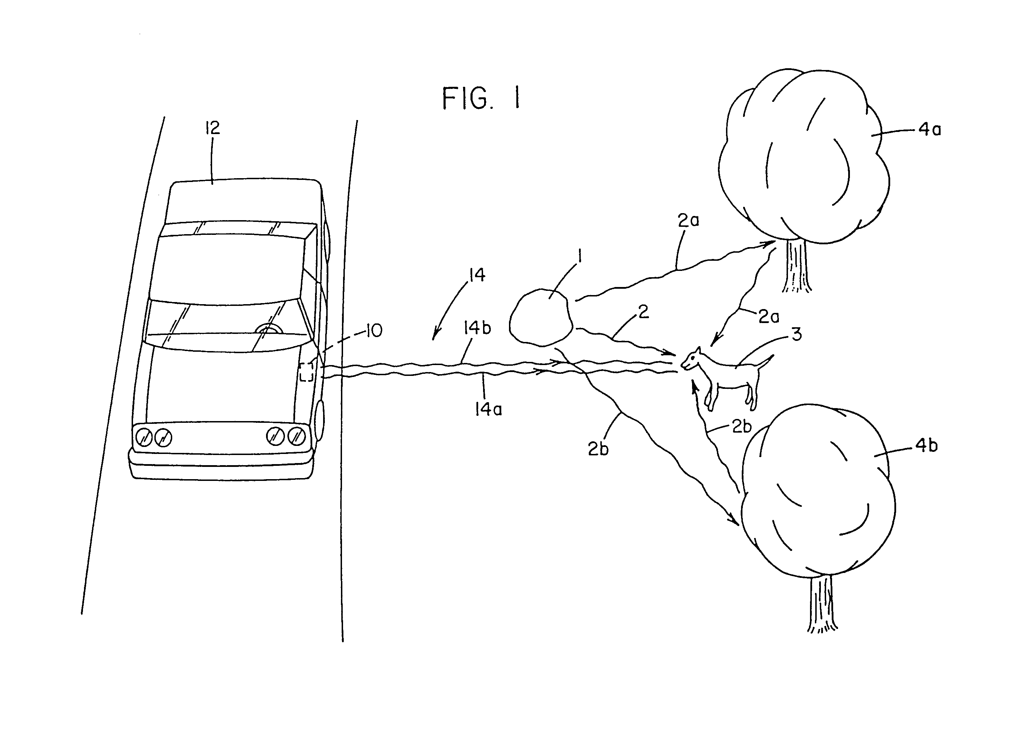

Fig.1 zeigt ein fahrendes Fahrzeug 12, das mit einer Audio-Alarm-Vorrichtung 10 ausgerüstet ist. Die Alarmvorrichtung 10 sendet Ultraschallgeräusche aus, die normalerweise eine gleichbleibende Lautstärke bzw. Intensität haben, deren Frequenz sich jedoch verändert. Die von der Alarmvorrichtung 10 erzeugten Ultraschallwellen haben Wellenformen, deren Frequenzen sich während einer festgelegten, diskreten Zeitdauer erhöhen und sich anschließend während einer ähnlichen diskreten Zeitdauer wieder verringern. Das Ultraschallgeräusch ist in Fig.1 schematisch als Schlangenlinie 14 dargestellt, wobei 14 a eine Ultraschallwelle mit wachsender Frequenz und 14b eine Welle mit sich verringernder Frequenz darstellen soll. Es sollte jedoch klar sein, daß die Alarmvorrichtung 10 ein Geräusch erzeugt, das aus vielen Schallwellen mit unterschiedlichen Frequenzen besteht. Da sich die Frequenz bzw. Wellenlänge der Schallwelle 14 erhöht und erniedrigt, kann das hierdurch erzeugte Geräusch mit dem Heulton verglichen werden, der von einer Sirene erzeugt wird. Wenn ein Tier 3 diesem Heulton ausgesetzt ist und insbesondere die Geräuschwellen mit sich verändernder Frequenz von feststehenden Objekten wie z.B. Bäumen 4a,4b reflektiert werden, kann es die reflektierten Wellen und die direkten Wellen 14a,14b vom Fahrzeug 12 einander nicht zuordnen und ist verwirrt und desorientiert. Es entfernt sich von der Schallquelle, bis sich die Lautstärke bzw. Intensität des Geräuschs verringert.

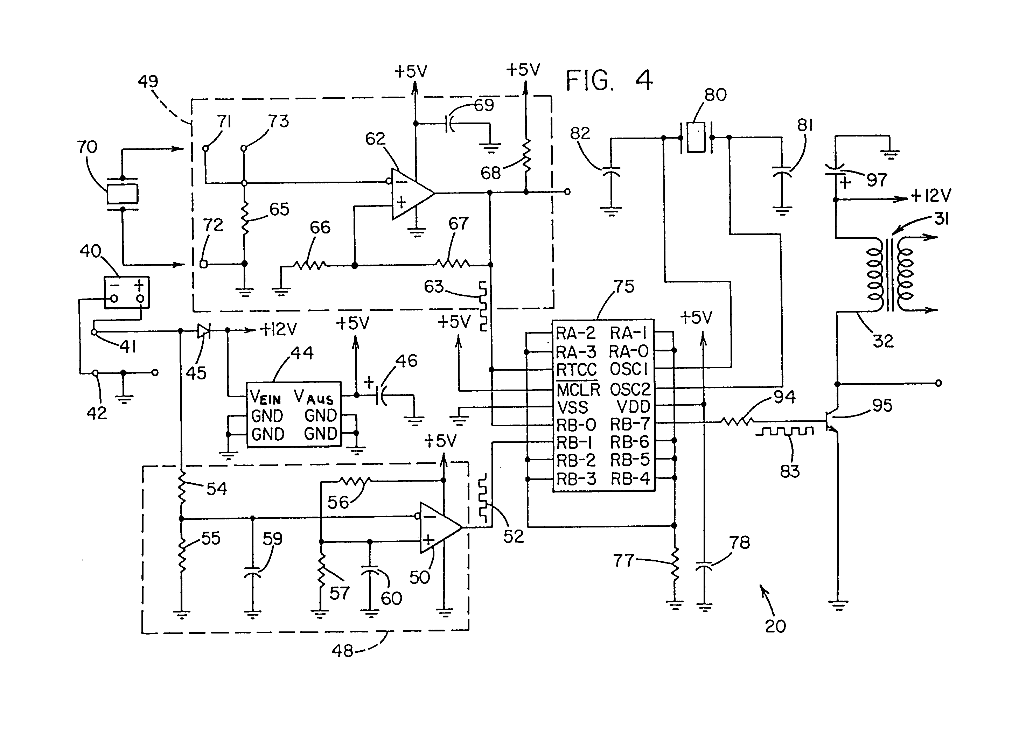

Der in der bevorzugten Ausführungsform verwendete Schaltkreis der Alarmvorrichtung 10 ist schematisch in den Fig. 4 und 5 dargestellt, die als herkömmliche Verdrahtungsdiagramme gezeichnet sind. Fig.4 stellt den Ansteuerungs- oder Treiberschaltkreis 20 dar, während Fig.5 den Wandlerschaltkreis 30 zeigt. Die dargestellten Schaltungen können auf nicht gezeigten, gedruckten Schaltungen oder auf Trägerplatinen zusammengesetzt sein, auf denen die elektrischen Bauteile in herkömmlicher Weise aufgelötet und/oder verdrahtet sind. Die Alarmvorrichtung 10 kann dann ein einfaches Gehäuse aufweisen, in dem die gedruckten oder bestückten Schaltungen bzw. Platinen angeordnet sind. Zu der Alarmvorrichtung 10 gehört dann noch ein Ultraschallautsprecher oder ein Schallwandler, der entweder fest mit dem Gehäuse verbunden ist oder an einer entfernt liegenden Stelle befestigt und mit dem Gehäuse bzw. der Schaltplatine verdrahtet ist. Die Alarmvorrichtung 10 wird mit Strom aus der Fahrzeugbatterie versorgt.

Fig.5 zeigt den Wandlerschaltkreis 30 mit einem Koppeltransformator 31, einem hierzu parallel geschalteten Kondensator 34, einem mit dem Transformator 31 in Serie geschalteten Belastungswiderstand 35 und mit einem piezoelektrischen Schallwandler 36, der parallel zum Kondensator 34 und zum Transformator 31 geschaltet ist. Zu dem Belastungswiderstand 35 ist eine Leuchtdiode 38 parallel geschaltet, an der der Fahrer des Fahrzeugs 12 erkennen kann, ob die Warneinrichtung in Betrieb ist.

An der Primärseite 32 des Transformators 31 des Wandlerschaltkreises 30 liegt eine Rechteckspannung mit wechselnden Frequenzen an, die periodisch größer und kleiner werden. Der Transformator 31 setzt die Rechteckspannung in eine Spannung mit sinusförmiger Wellenform um, die an seiner Sekundärseite 33 abgegriffen wird. Der Spitzenwert der sinusförmigen Welle beträgt in der bevorzugten Ausführungsform etwa 40 Volt. Da der Wandler 36 diesem Spitzenwert der elektrischen Spannung einer Sinuswelle nicht so lange ausgesetzt ist, wie dies bei einer rechteckförmigen Spannungswelle der Fall wäre, kann er einer bedeutend größeren Spannung oder elektrischen Impulsen in Sinuswellenform unterworfen werden. Dadurch kann er lautere bzw. intensivere Geräusche erzeugen, ohne sich zu überhitzen und vorzeitig auszufallen, was bei einem Wandler derselben Bauart geschehen könnte, der mit Rechteckwellen oder damit vergleichbaren Spannungswellenformen beaufschlagt wird.

Der Fachmann kann leicht erkennen, daß auch andere Wellenformen verwendet werden können, deren Spitzenspannungen nur kurzzeitig auftreten und mit denen der Wandler betrieben werden kann, ohne daß er sich überhitzt. Solche anderen Wellenformen fallen auch unter die Erfindung. Es ist jedoch ein bevorzugtes Merkmal der Erfindung, eine sinusförmige Wellenform zu verwenden, da diese keinen speziellen Wellengenerator-Schaltkreis erfordert, da die Sinuswelle bereits von dem Transformator erzeugt wird, und da die Form des Scheitelpunkts der Sinuswelle für die Geräuscherzeugung besonders vorteilhaft ist.

Es sei hier angemerkt, daß die Spitzen-Spitzen-Spannung an der Primärseite 32 des Transformators 31 wie auch der Spitzen-Spitzenwert der sinusförmigen Wellenspannung an der Sekundärseite 33 konstant und gleich groß sind. Es hat sich gezeigt, daß keramische Lautsprecher, insbesondere direktabstrahlende Hochtonlautsprecher mit 38 mm (1,5") Durchmesser (z.B. Motorola Mod.Hr. KSN 1075A, 1076A, 1101A) ein ausgezeichnetes Ansprechverhalten im Ultraschallfrequenzbereich haben und als piezoelektrische Schallwandler 36 verwendet werden können. Als Ultraschallwelle soll hier eine Welle bezeichnet werden, deren Frequenz mindestens 18 - 20 kHz beträgt.

Der Kondensator 34 und der Widerstand 35 sind so bemessen, daß sie bei der mittleren Frequenz (mid-point frequency) der Sinusspannungswellen im Wandlerschaltkreis 30 in Resonanz sind. Bei der beschriebenen Ausführungsform variiert die Sinuswellenfrequenz bevorzugt im Bereich zwischen etwa 21 und 24 kHz, so daß die Bauteile des Wandlerschaltkreises 30 so abgestimmt sind, daß ihre optimale Ansprechzeit oder Resonanz bei etwa 22,5 kHz liegt.

Fig.4 zeigt eine Prinzipskizze des Treibers oder Ansteuerungsmechanismus 20, wobei die dickgezeichneten Knotenpunkte Leitungsverbindungen oder Verbindungen auf der gedruckten Schaltplatine darstellen. Einige der gezeigten und nicht numerierten oder nicht beschriebenen Linien stellen dünne Leitungsbahnen dar, die in bekannter Weise als Schmelzsicherungen dienen. Die Funktionsweise einiger Bauteile im Schaltkreis soll nicht eingehend beschrieben werden, da diese dem Fachmann aus der Zeichnung ohne weiteres verständlich wird.

In Fig.4 bezeichnet 40 die Batterie des Fahrzeugs, die an die nicht dargestellte Fahrzeuglichtmaschine angeschlossen ist. Die Batterie 40 versorgt den Treiber 20 über Klemmen 41 und 42 mit Strom, wobei der Kontakt 42 am Masseanschluß liegt. Weitere Masseanschlüsse des Treibers sind aus der Zeichnung ersichtlich. Alle in diesem Schaltkreis verwendeten Bauteile sind als solche bereits bekannt. Die Eingangsspannung beträgt 12 Volt und die Steuerspannung (biasing voltage) beträgt 5 Volt. Der Schaltkreis erhält Strom von der Batterie über einen positiven Spannungsregler 44, dem eine Diode 45 und ein Kondensator 46 zugeordnet ist.

Der Schaltkreis 20 hat zwei Rechteckwellengeneratoren mit Operationsverstärkern. Der eine Rechteckwellengenerator ist innerhalb der gestrichelten Linien 48 dargestellt und dient als "Crank-Detektor", der eine Rechteckgrundwelle 52 erzeugt, solange die Batterie nicht entladen ist. Er wirkt also als Niederspannungs-detektor.

Der andere Rechteckwellengenerator ist ein Vibrations-Detektor-Schaltkreis 49, der in ähnlicher Weise so lange eine Rechteckwelle 63 erzeugt, wie Vibrationen vom Motor des Fahrzeugs wahrgenommen werden. Wenn der Fahrzeugmotor läuft, arbeitet der Vibrations-Detektor-Schaltkreis 49 und erzeugt die schematisch dargestellte Rechteckwelle 63, so daß die Alarmvorrichtung 10 arbeiten kann. Sowohl der "Crank-Detektor"-Schaltkreis 48 als auch der Vibrations-Detektor-Schaltkreis 49 verwenden Operationsverstärker 50,62, die im Klasse "C"-Betrieb arbeiten. Der Klasse "C"-Verstärkerbetrieb wird in seinem klassischen, herkömmlich definierten Sinn verstanden. Das bedeutet, daß der statische Arbeitspunkt oder auch Q-Punkt auf der Gleichspannungs-Belastungslinie der Verstärkerkennlinien (Kollektorstrom in Abhängigkeit von Kollektor-Emitter-Spannung) unterhalb des Grenzpunkts (der X-Achse) der Lastlinie liegt.

Zwar bewirken Klasse "C"-Verstärker eine nicht unerhebliche Amplitudenverzerrung, sie haben jedoch eine sehr große Kollektor-Emitter-Spannung, so daß sie eine höchstmögliche Spannung oder Leistung für den Wandler-Schaltkreis bereitstellen können. Ein in Klasse "C" arbeitender Verstärker oder Transistor arbeitet typischerweise bei niedrigeren Temperaturen, als dies bei Operations-verstärkerkreisen der typischen Klassen "A", "B" oder "A-B" der Fall ist.solche Verstärker würden wesentlich mehr Wärme abgeben und größere Kühlkörper erfordern. Außerdem würden derartige Verstärker ("A","B","A-B") mehr zusätzliche Bauteile erfordern und einen Sinuswellen-Entzerrkreis benötigen, um die Leistungsfähigkeit des piezoelektrischen Wandlers voll auszunutzen.

Der "Crank-Detektor"-Schaltkreis 48 hat einen umpolenden Operationsverstärker 50 mit Bauteilen in der gezeigten Anordnung, um eine Rechteckwellenspannung 52 mit konstanter Amplitude zwischen den Wellenscheiteln zu erzeugen. Zu den Bauteilen im "Crank-Detektor"-Kreis 48 gehören Widerstände 54,55,56 und 57 und Kondensatoren 59 und 60 in der gezeigten Anordnung.

Der Vibrationsdetektorschaltkreis 49 verwendet in ähnlicher Weise einen umpolenden Operationsverstärker 62 und weitere elektrische Komponenten, um die Rechteckwelle 63 mit konstanter Amplitude zwischen den oberen und unteren Wellenscheiteln zu erzeugen.

Zu den Bauteilen gehören Widerstände 65,66,67 und 68 und ein Kondensator 69, der an der Steuer-oder Vorspannung des Verstärkers anliegt, wie dies aus der Zeichnung ersichtlich ist. Mit dem Widerstand 65 ist ein Bewegungssensor 70 in Serie geschaltet, der über Klemmen 71,72 mit dem Vibrations-Detektor-Schaltkreis 49 verbunden ist. Der Bewegungssensor 70 muß von Fahrzeugbewegungen oder -vibrationen erst betätigt werden, um den Vibrations-Detektor-Schaltkreis zu aktivieren. Der Spannungseingang für den Vibrationsdetektorschaltkreis 49 befindet sich an den Klemmen 71 und 73.

Die Rechteckwellen 52,63 werden einem konventionellen 8-bit CMOS Mikroprozessor 75 zugeleitet. Der Ausgang des Mikroprozessors 75 ist bei RB-7. Mit dem Mikroprozessor 75 ist weiter ein Widerstand 77 und ein Kondensator 78 verbunden, die beide geerdet sind. Ferner ist an dem Mikroprozessor 75 ein Zeitgebermechanismus oder -schaltkreis angeschlossen. Der Zeitgebermechanismus besteht aus einen 4,0 MHz-Resonator 80 und einen ersten und zweiten Kondensator 81 bzw. 82.

Der Mikroprozessor vervielfältigt und/oder zerteilt mit Hilfe seiner eingebauten Software die ankommende Rechteckwelle, so daß ihre Frequenz bzw. Wellenlänge fortschreitend vergrößert oder verkleinert wird. Der Resonator 80 schaltet zusammen mit den Kondensatoren 81,82 den Mikroprozessor so, daß dieser die Wellenfrequenz während bestimmter Zeitintervalle oder Pulsdauern $T_1$ abwechselnd erst vergrößert und anschließend wieder verringert.

Wenn der eine Kondensator 82 entladen wird, ist der andere Kondensator 81 unter Spannung gesetzt. Bei dieser Figuration erhöht der Mikroprozessor die Frequenz der Rechteckspannung. Wenn der Resonator, der auf 4 MHz zeitlich abgestimmt ist, die Ladungs-und Entladungsvorgänge der beiden Kondensatoren 81,82 vertauscht, verringert der Mikroprozessor 75 die Frequenz der an der Klemme RB-7 ausgegebenen Rechteckimpulse, die in Fig.4 schematisch bei 83 gezeigt sind.

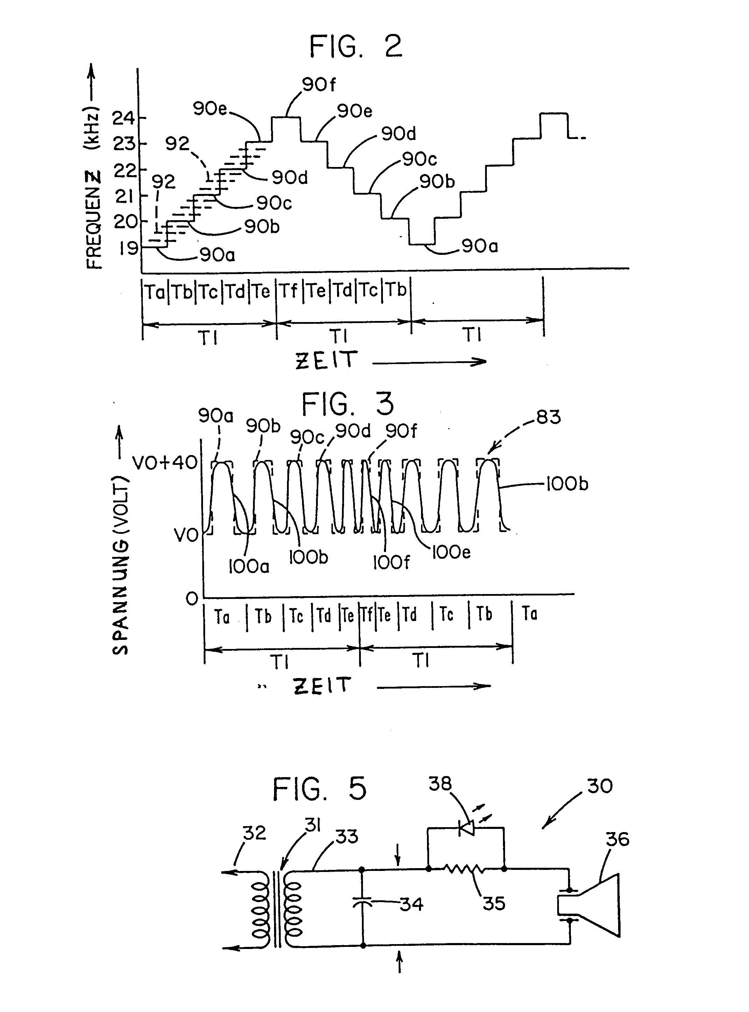

Die Spannungswellen sind schematisch in den Fig. 2 und 3 gezeigt. Der Mikroprozessor 75 gibt eine erste Rechteckspannungswellenform 90a aus, die in einer Version der bevorzugten Ausführungsform eine Frequenz von 19 kHz hat. Der Mikroprozessor erzeugt dann eine zweite Rechteckwellenform 90b mit einer Frequenz von 20 kHz.

Während aufeinanderfolgender Zeitabschnitte $T_a$, $T_b$, $T_c$ usw. ändert der Mikroprozessor schrittweise die Frequenz der Spannungswelle auf die nächsthöhere Frequenz, wobei während jedes Zeitabschnitts $T_a,T_b,T_c$ usw. mehrere Einzelwellen einer Frequenz erzeugt werden. Da sich die Wellenlänge mit der Frequenz verändert, werden während der einzelnen iterativen Zeitabschnitte $T_a$, $T_b$, usw. immer mehr Wellen erzeugt. In Fig.2 sind diese als gleichbleibend gezeigt, während die Frequenz sequentiell auf höhere Werte ansteigt. Der Mikroprozessor erhöht die Frequenz schrittweise bis zu einer Frequenz 90f der Rechteckspannnungswelle, die 24 kHz beträgt. Der Zeitgeberschaltkreis mit dem Resonator 80 und den Kondensatoren 81 und 82 steuert dann die Schaltung um, um Wellenformen mit abnehmender Frequenz in den Schritten 90e, 90d, 90c, 90b und 90 a zu erzeugen. Wenn die niedrigste Frequenz bei 90a erreicht ist, wird der Mikroprozessor wieder vom Zeitgeberkreis umgeschaltet.

Die Umschaltzeiten oder Pulsdauern sind in den Figuren 2 und 3 als T1 bezeichnet und sind beim Anheben und Absenken der Frequenz etwa gleich groß, so daß sich ein gleichmäßig an- und abschwellender Effekt wie bei einer Sirene einstellt. Die Umschaltzeit $T_1$ beträgt bevorzugt etwa 200 ms für den Resonator 80, die Kondensatoren 81,82 und den Mikroprozessor 75, was gute Ergebnisse liefert.

Wie durch die gestrichelten Linien 92 in Fig. 2 angedeutet ist, kann die Frequenz der Spannungswellen während der Umschaltzeit oder Pulsdauer T1 auch kontinuierlich vergrößert bzw. verringert werden. Anders ausgedrückt, können je nach Mikroprozessor während der iterativen Zeitabschnitte $T_a$, $T_b$, $T_c$, usw., während derer der Mikroprozessor 75 seine mathematischen Funktionen abarbeitet und die Frequenz der Wellenformen verändert, entweder viele Wellen mit fester Frequenz 90a, 90b, 90c usw.auftreten oder während der einzelnen Zeitabschnitte $T_a$, $T_b$, $T_c$ usw. verschiedene Wellen 92 mit wechselnder Frequenz erzeugt werden. In beiden Fällen ist das Konzept dasselbe. Um die iterativen Funktionen durchzuführen und die Frequenz der Spannungswellen erst zu erhöhen und anschließend zu verringern, wird ein Mikroprozessor in Verbindung mit einem Zeitgebermechanismus verwendet. Dadurch wird die Frequenz der Spannungswellen erst erhöht bzw. ihre Wellenlänge verkürzt und dann die Frequenz wieder verringert bzw. die Wellenlänge vergrößert, nachdem mehrere Zeitintervalle während einer bestimmten Umschaltzeit oder eines Pulses verstrichen sind. Erfindungsgemäß kann jede iterative Funktion zugrundegelegt werden, nach der jede Art von gewünschtem "An- und Abschwellen" erzeugt wird. Es ist auch möglich, in den Zeitgebermechanismus Verzögerungen einzubauen, um das An- und Abschwellen zu unterbrechen.

Bei einer bevorzugten Ausführungsform der Erfindung wird die Frequenz von 21 kHz auf 24 kHz angehoben und unmittelbar darauf wieder auf 21 kHz verringert, was gute Ergebnisse liefert. In Fig. 2 liegt die Frequenz zwischen 19 und 24 kHz, was ebenfalls wirksam ist. Es wird angenommen, daß die Alarmvorrichtung 10 im Bereich zwischen 19 und 30 kHz oder irgendeinem dazwischen liegenden Teilbereich wirksam arbeitet.

Erfindungsgemäß ist es möglich, daß zwischen den ansteigenden und abfallenden Frequenzen, d.h. zwischen den einzelnen Pulsen bzw. Umschaltzeiten $T_1$, während einer vorher festgelegten Totzeit keine

6

Spannungswellen erzeugt werden und demgemäß während dieser Totzeit keine Ultraschallgeräusche von dem Schallwandler 36 erzeugt werden.

Es ist auch möglich, die Ultraschallerzeugung nach einer bestimmten Anzahl vollständig durchlaufener Zyklen mit an- und abschwellender Frequenz für eine Zeitlang zu unterbrechen.

Je nach Anwendungsgebiet ist es auch möglich, daß der Mikroprozessor so betrieben wird, daß mehr Wellen einer bestimmten Frequenz erzeugt werden.

Beispielsweise ist eine stationäre Anwendung der Erfindung denkbar, bei der bestimmte Tiere, die besonders sensibel auf eine bestimmte Abfolge von Ultraschallgeräuschen reagieren, davon abgehalten werden, in ein bestimmtes Gebiet einzudringen.

Ferner ist es möglich, einen Warnsireneneffekt mit einer bestimmten Mittelfrequenz oder Resonanz zu erzeugen. Beispielsweise kann die Frequenz während der iterativen Zeitabschnitte $T_a$ und $T_b$ gleich groß sein. Die Versuchsergebnisse haben jedoch gezeigt, daß das gleichmäßige An- und Abschwellen am erfolgreichsten ist, um Tiere gefahrlos zu verscheuchen.

In Fig.3 sind die vom Mikroprozessor 75 am Ausgangsstift RB7 ausgegebenen Rechteckwellen 90a, 90b, 90c, usw. gestrichelt dargestellt. Um die Zeichnung deutlicher zu machen, sind die Zeitabschnitte $T_a$, $T_b$, $T_c$ usw. unterschiedlich lang dargestellt, obwohl diese jedoch etwa gleich lang sind. Ferner ist nur jeweils eine Welle dargestellt. Da die Operationsverstärker 50, 62 in einem Klasse "C"-Zyklus arbeiteten, haben sie eine Grundlinienspannung, die mit einem Wert $V_o$ eingezeichnet ist. Die Amplitude der darüber schwingenden Spitze-Spitze- oder Amplitudenspannung beträgt 40 V. Fig.3 zeigt weiter sinusförmige Wellen 100 a-f, die von dem Wandlerschaltkreis 30 aus den Rechteckspannungswellen 83 des Treiberschaltkreises 20 umgeformt werden.

Wie aus Fig.4 hervorgeht, werden die von dem Mikroprozessor 75 erzeugten Rechteckspannungswellen 83 mit ansteigender und geringer werdender Frequenz anschließend in einem Transistor 95 verstärkt, der ebenfalls ein in Klasse "C" arbeitender Operationsverstärker ist. Die verstärkten und geordnet wechselnden Frequenzwellen liegen an der Primärseite 32 des Transformators 31 an. Am anderen Anschluß der Primärseite 32 des Transformators 31 ist ein Kondensator 97 angeschlossen, der zum Schließen des Schaltkreises geerdet ist.

Im weiteren sind alle Bauteile mit Teilenummer und Hersteller in tabellarischer Form aufgeführt, die in den Schaltdiagrammen nach Fig.4 und 5 beschrieben sind. Wie bereits bemerkt, handelt es sich bei allen Teilen um herkömmliche Schaltkreisbausteine.

| Bezugszeichen | Bauteil/Beschreibung | Teilenummer | Hersteller |
|---|---|---|---|
| 31 | Transformator | 3456-01 | Transformers, Inc. |
| 34 | Kondensator, .47$\mu$f metallbeschichtetes Polypropylen | ARPM00474 15JHFBK22 | Aerovox |
| 35 | Widerstand 15 ohm, 5% Oberflächen-Beschichtung | CRCW2010-150JRT1 | Dale |
| 36 | Wandler | KSN1075ENG | Motorola |
| 39 | LED, rot | LTL-4211N | Lite-On |
| 44 | Positver Spannungsregler | MC78L05ABD | Motorola |
| 45 | Diode, SOD__87 | PRLL4001 | Phillips |
| 46 | Kondensator, 10$\mu$f,6,3V,Tant | TAJB106M006 | AVX |
| 50 | Niederleistungs Reflex-Operationsverstärker | LM258DT | SGS-Thompson |
| 54,56, 57 | Widerstand, 10K, 5% | CR21-103F-T | KOS |
| 55 | Widerstand, 3,3K, 1X | CR21-332F-T | KOS |
| 59,60, 69,78 | Kondensator, 33pf, 50v, 10% | 500R15H 103KVE | Johanson |
| 65,77, 68 | Widerstand, 10K,5% | CR21-103J-T | KOA |
| 67 | Widerstand, 1M, 5% | CR21-105J-T | KOA |
| 70 | Bewegungssensor | KBS-20DA-7A | AVX |
| 75 | 8-bit CMOS Mikroprozessor auf EPROM-Basis | P1C16C54 | Microchip |
| 80 | Resonator, 4,000 MHz | PBRC-4.00AR | AVX |
| 81,82 | Kondensaotor, 33pf, 50V,10% | 500R15NV4E | Johanson |
| 94,66 | Widerstand, 180 ohm, 5% | CR21-181J-T | KOA |
| 95 | Transistor | MJF122 | Motorola |
| 97 | Kondensator, .47$\mu$f, 25V, AL EL | 515D227M02 5BB6A | Sprague |

Die Erfindung ist nicht auf die beschriebene bevorzugte Ausführungsform beschränkt, sondern es ergeben sich vielfältige Änderungsmöglichkeiten und Modifikationen, ohne den Rahmen der Erfindung zu verlassen.

**Patentansprüche**

1. Vorrichtung zum Verscheuchen von Tieren, die Ultraschallgeräusche wahrnehmen können, gekennzeichnet durch:

    a) einen Schallwandler (36) zum Erzeugen von Geräuschen im Ultraschallfrequenzbereich;

    b) elektrische Mittel (20,30) zum Betreiben des Schallwandlers (36), so daß dieser mindestens eine erste Gruppe und eine darauffolgende zweite Gruppe von Schallwellen mit bestimmten, wechselnden Ultraschallfrequenzen ausgibt und so einen Ultraschall-Heulton erzeugt; und

    c) eine elektrische Stromquelle (40) für den Betrieb der elektrischen Mittel.

2. Vorrichtung nach Anspruch 1, **dadurch gekennzeichnet,** daß die elektrischen Mittel (20,30) folgende Bauteile umfassen:

    - Treibermittel (20) zum Erzeugen von mindestens einem ersten und einem zweiten Strompuls (T1) mit Spannungswellen (90), deren Frequenzen (90 a-f) den wechselnden Ultraschallfrequenzen entsprechen;

- einen Koppeltransformator (31) zum Umformen der Spannungswellen der Strompulse in sinusförmige Spannungswellen (100 a-f), die am Schallwandler (36) anliegen; und
- Kondensatormittel (34), die parallel zu dem Koppeltransformator (31) geschaltet und an diesen angepaßt sind.

3. Elektronische Vorrichtung zum Verscheuchen von Tieren, die Ultraschallgeräusche wahrnehmen können, insbesondere zum Einbau in Fahrzeuge, gekennzeichnet durch:
   a) Treibermittel (20) zum Erzeugen von ersten und zweiten elektrischen Pulsen (T1) mit vorherbestimmten Spannungswellen (90) wechselnder Frequenz;
   b) einen Koppeltransformator (31), der an seiner Primärseite (32) die ersten und zweiten elektrischen Pulse (83) empfängt;
   c) Kondensatormittel (34) in parallelschaltung mit der Sekundärseite (33) des Koppeltransformators (31); und
   d) einen zu dem Kondensator (34) und dem Transformator (31) parallelgeschalteten Schallwandler (36) zum Erzeugen von ersten und zweiten einander abwechselnden Gruppen von Ultraschallwellen, deren Wellenlänge mit der wechselnden Frequenz der Spannungswellen in Wechselbeziehung steht.

4. Vorrichtung nach einem der Ansprüche 1 bis 3, **dadurch gekennzeichnet,** daß der Schallwandler (36) eine erste Gruppe von Ultraschallwellen während eines ersten diskreten Zeitintervalls ($T_1$) und eine zweite Gruppe von Ultraschallwellen während eines darauffolgenden, zweiten diskreten Zeitintervalls ($T_1$) erzeugt.

5. Vorrichtung nach einem der Ansprüche 1 bis 4, **dadurch gekennzeichnet,** daß das erste diskrete Zeitintervall ($T_1$) und das zweite diskrete Zeitintervall ($T_1$) gleich sind.

6. Vorrichtung nach einem der Ansprüche 1 bis 5, **dadurch gekennzeichnet,** daß die diskreten Zeitintervalle ($T_1$) vorherbestimmt sind.

7. Vorrichtung nach einem der Ansprüche 1 bis 6, **dadurch gekennzeichnet,** daß der Schallwandler (36) ein piezo-elektrischer Lautsprecher ist.

8. Vorrichtung nach einem der Ansprüche 1 bis 7, **dadurch gekennzeichnet,** daß die elektrischen Mittel (20,30) Mittel (31,34) zum Erzeugen einer konstanten Spitze-Spitze-Spannung ($V_o + 40$) in Form einer ungedämpften Sinuswelle (100) aufweisen, die am Schallwandler (36) anliegt.

9. Vorrichtung nach einem der Ansprüche 1 bis 8, **dadurch gekennzeichnet,** daß die Spannungswellen (90) der ersten und zweiten Pulse (T1) die gleiche Frequenz haben wie die vom Schallwandler (36) erzeugten Ultraschallwellen.

10. Vorrichtung nach einem der Ansprüche 1 bis 9, **dadurch gekennzeichnet,** daß die Frequenz der Spannungswellen während eines der ersten elektrischen Pulse fortlaufend erhöht wird und während eines der zweiten elektrischen Pulse fortlaufend verringert wird.

11. Vorrichtung nach einem der Ansprüche 1 bis 10, **dadurch gekennzeichnet,** daß die Frequenzen der Spannungswellen (90) und der Ultraschallwellen (100) im Bereich zwischen etwa 19 und 30 kHz liegen.

12. Vorrichtung nach einem der Ansprüche 1 bis 11, **dadurch gekennzeichnet,** daß die Frequenzen zwischen 19 und 25 kHz liegen.

13. Vorrichtung nach einem der Ansprüche 1 bis 12, **dadurch gekennzeichnet,** daß die Frequenzen zwischen 21 und 24 kHz liegen.

14. Vorrichtung nach einem der Ansprüche 1 bis 13, **dadurch gekennzeichnet,** daß die Frequenz der Spannungswellen (90) während eines der ersten Pulse (83) fortlaufend von etwa 19 kHz auf etwa 24 kHz erhöht wird und während eines der zweiten Pulse (83) fortlaufend von etwa 24 kHz auf etwa 19 kHz verringert wird.

**15.** Vorrichtung nach einem der Ansprüche 1 bis 14, **dadurch gekennzeichnet,** daß die Kondensatormittel (34) aus einem Kondensator bestehen, der so ausgelegt ist, daß er etwa beim Mittelwert der Frequenzen der Spannungswellen in Resonanz ist.

**16.** Vorrichtung nach einem der Ansprüche 1 bis 15, **dadurch gekennzeichnet,** daß die Resonanzfrequenz des Koppeltransformators (31) und des Kondensators (34) etwa 22,5 kHz beträgt.

**17.** Vorrichtung nach einem der Ansprüche 1 bis 16, **dadurch gekennzeichnet,** daß die Treibermittel (20) eine Mikroprozessoreinrichtung (75) zum Erzeugen der elektrischen Spannungswellen (90) haben und Zeitzählmittel (80,81,82) aufweisen, die mit der Mikroprozessoreinrichtung (75) zusammenwirken, um abwechselnd die ersten und zweiten Pulse von Spannungswellen zu erzeugen.

**18.** Vorrichtung nach einem der Ansprüche 1 bis 19, **dadurch gekennzeichnet,** daß die Zeitzählmittel (80,81,82) die Mikroprozessoreinrichtung (75) etwa alle 200 ms vom Erzeugen erster Pulse auf die Erzeugung von zweiten Pulsen umschalten.

**19.** Vorrichtung nach einem der Ansprüche 1 bis 18, **dadurch gekennzeichnet,** daß die Treibermittel (20) die Spannungswellen der ersten und zweiten Pulse als Rechteckwellen (83) erzeugen.

**20.** Vorrichtung nach einem der Ansprüche 1 bis 19, **dadurch gekennzeichnet,** daß die Treibermittel (20) Operations-Verstärker (50,62) aufweisen, die in einem Klasse "C"-Verstärkerzyklus arbeiten.

**21.** Vorrichtung nach einem der Ansprüche 1 bis 20, **dadurch gekennzeichnet,** daß die Operationsverstärker (50,62) Rechteckwellen erzeugende Verstärker sind.

**22.** Vorrichtung nach einem der Ansprüche 1 bis 21, **dadurch gekennzeichnet,** daß die Spitze-Spitze-Spannungen ($V_o + 40$) der Spannungswellen (90) etwa konstant ist.

**23.** Vorrichtung nach einem der Ansprüche 1 bis 22, **dadurch gekennzeichnet**, daß die Intensität der Ultraschallwellen etwa konstant ist.

**24.** Vorrichtung nach einem der Ansprüche 1 bis 23, **dadurch gekennzeichnet,** daß eine der zweiten Gruppen von Schallwellen unmittelbar auf eine der ersten Gruppen von Schallwellen folgt und eine weitere erste Gruppe von Schallwellen unmittelbar auf diese zweite Gruppe von Schallwellen folgt.

**25.** Vorrichtung nach einem der Ansprüche 1 bis 24, **dadurch gekennzeichnet,** daß die elektrischen Mittel (20,30) zwischen einer der ersten Gruppen von Schallwellen und einer der zweiten Gruppen von Schallwellen die Geräuscherzeugung für eine bestimmte Totzeit unterbrechen, während der kein Geräusch erzeugt wird.

**26.** Vorrichtung nach einem der Ansprüche 1 bis 25, **dadurch gekennzeichnet,** daß eine der ersten Gruppen von Schallwellen nach einer bestimmten Totzeit auf eine der zweiten Gruppen von Schallwellen folgt.

**27.** Vorrichtung nach einem der Ansprüche 1 bis 26, **dadurch gekennzeichnet,** daß die Treibermittel (20) einen Niederspannungs-Detektor-Kreis (48) enthalten.

**28.** Vorrichtung nach einem der Ansprüche 1 bis 27, **dadurch gekennzeichnet,** daß die Treibermittel (20) einen Vibrations-Detektor-Schaltkreis (49) mit einem Bewegungsdetektor (70) aufweisen.

**29.** Vorrichtung nach einem der Ansprüche 1 bis 28, **dadurch gekennzeichnet,** daß dem Schallwandler (36) eine Leuchtdiode (38) zugeordnet ist.

**30.** Verfahren zum Verscheuchen von Tieren, insbesondere zur Verwendung in einem Fahrzeug, um Tiere davon abzuhalten, in den Fahrweg des Fahrzeugs zu laufen, mit folgenden Verfahrensschritten:
   - Erzeugen von mindestens einem ersten und einem zweiten elektrischen Puls mit Spannungswellen wechselnder Frequenz mit Hilfe von elektrischen Treibermitteln;

- Zuführen der elektrischen Pulse zu einem Schallwandler (36), der mindestens eine erste Gruppe und eine zweite Gruppe von Ultraschallwellen erzeugt, deren Frequenz der Frequenz der Spannungswellen entspricht.

31. Verfahren nach Anspruch 30, **dadurch gekennzeichnet,** daß der erste elektrische Puls und der zweite elektrische Puls die gleiche, festgelegte Zeitdauer (T1) haben.

32. Verfahren nach Anspruch 30 oder 31, **dadurch gekennzeichnet,** daß die Frequenzen der Spannungswellen (90 a-f) des ersten elektrischen Pulses nacheinander erhöht werden und die Frequenzen der Spannungswellen (90 f-a) des zweiten elektrischen Pulses nacheinander verringert werden.

33. Verfahren nach einem der Ansprüche 30 bis 32, **dadurch gekennzeichnet,** daß die Spannungswellen der Pulse als Rechteckwellen erzeugt werden, die von einem Transformator (31) in Sinuswellen umgesetzt und dem Schallwandler (36) zugeleitet werden.

34. Verfahren nach einem der Ansprüche 30 bis 33, **dadurch gekennzeichnet,** daß die zweite Gruppe von Ultraschallwellen unmittelbar auf die erste Gruppe von Ultraschallwellen folgt und eine weitere erste Gruppe von Ultraschallwellen auf die zweite Gruppe von Ultraschallwellen folgt.

35. Verfahren nach einem der Ansprüche 30 bis 34, **dadurch gekennzeichnet,** daß die weitere erste Gruppe von Ultraschallwellen auf die zweite Gruppe von Ultraschallwellen nach einer diskreten Totzeit folgt, während der der Schallwandler kein Geräusch erzeugt.

36. Verfahren nach einem der Ansprüche 30 bis 35, **dadurch gekennzeichnet,** daß die Frequenzen der Spannungswellen und der Ultraschallwellen zwischen etwa 19 und 30 kHz liegen.

37. Verfahren nach einem der Ansprüche 30 bis 36, **dadurch gekennzeichnet,** daß die Ultraschallwellen mit gleichbleibender Intensität erzeugt werden.

FIG. I

EP 0 581 214 A1

FIG. 2

FIG. 3

FIG. 5

FIG. 4

EP 0 581 214 A1

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | CH-A-522 357 (MARIO WINKLER) | 1,4-14, 22-26, 30-32, 34-37 | A01M29/02 G10K5/02 G10K9/13 |
| Y | * das ganze Dokument * | 2,3,15, 17,19, 21,27 | |
| | --- | | |
| Y | DE-A-23 63 731 (GRAETZ KG) * das ganze Dokument * | 2,3,15 | |
| | --- | | |
| Y | US-A-4 926 159 (BARTLETT) | 2,3,17, 19,21,27 | |
| A | * das ganze Dokument * | 1,4-10, 30-32 | |
| | --- | | |
| X | US-A-4 001 817 (SQUIRES) * Zusammenfassung; Ansprüche * | 1,30 | |
| | --- | | |
| X | EP-A-0 101 059 (B & M LIZENZGESELLSCHAFT MBH) * das ganze Dokument * | 1,30 | RECHERCHIERTE SACHGEBIETE (Int.Cl.5) |
| | --- | | A01M |
| A | DE-A-32 43 156 (STARFLINGER) * das ganze Dokument * | 1,30 | G10K G08B B60Q |
| | --- | | |
| A | EP-A-0 284 705 (KOCKUM SONICS AB) * das ganze Dokument * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 9. November 1993 | REEKMANS, M |

EPO FORM 1503 03.82 (P04C03)